# EUROPEAN PATENT APPLICATION

(11) **EP 2 763 028 A1**
(43) Date of publication of application: **06.08.2014**
(21) Application number: 13191212.3
(22) Date of filing: 31.10.2013
(51) Int. Cl.: G06F 3/14, G06F 9/445, H04L 29/08, H04L 12/26

(54) **Remote control system and method**

(30) Priority: 04.02.2013 TW 102104125
(71) Applicant: Hon Hai Precision Industry Co., Ltd., New Taipei City (TW)
(72) Inventor: Lin, Ke-Fei, New Taipei (TW); Jeng, Shan-Chuan, New Taipei (TW); Yeh, Chien-Fa, New Taipei (TW); Lee, Chung-I, New Taipei (TW)
(74) Representative: Gray, John James

(57) **Abstract**

A server 50 remotely controls a remote computer 10. The server 50 sends a monitoring program to the remote computer 10, wherein a remote control application is installed in the server 50 and the remote computer 10. The server 50 receives a request from the monitoring program installed in the remote computer 10 that has an error. The server 50 activates a remote control application in the server 50 and the remote computer 10, and remotely controls the remote computer 10 via the remote control application.

## Description

### Field

Embodiments of the present disclosure relate to remote control technology, and particularly to a system and method for remotely controlling a remote computer.

### BackGround

A desktop sharing technology provides an electronic device having a graphical user interface to connect to a computer over a network connection, so that the electronic device can remotely access and control the computer. Using the desktop sharing technology, a user can thus remotely repair the computer. For example, if the computer has an error (e.g., an internet browser does not function properly) and the user that is authorized to use the computer does not know how to fix the error, the user may ask for help from the user of the electronic device via the desktop sharing technology. However, at present, the user first needs to send a request for help to the user of the electronic device, the user of the electronic device must receive and accept the request before he/she can control the remote computer and check for any errors in the computer. In such situation, the entire process includes a request process, an accept process and the control process. Thus, there is room for improvement in the art.

### Summary

According to one aspect of the disclosure, an installation method is provided. The installation method includes sending a monitoring program from a server to each remote computer, wherein a remote control application is installed in the server and the remote computer, receiving a request from the monitoring program installed in the remote computer that has an error, and activating the remote control application in the server and the remote computer, and remotely controlling the remote computer via the remote control application.

### BRIEF DESCRIPTION OF THE DRAWINGS

Embodiments of the invention are described, by way of example only, with reference to the accompanying drawings, in which:

FIG. 1 is a schematic block diagram of one embodiment of a remote control system.

FIG. 2 is a block diagram of one embodiment of function modules of a server included in FIG. 1.

FIG. 3 is a flowchart of one embodiment of a remote control method.

### DETAILED DESCRIPTION

In general, the word "module", as used herein, refers to logic embodied in hardware or firmware, or to a collection of software instructions, written in a programming language, such as, JAVA, C, or assembly. One or more software instructions in the modules may be embedded in firmware, such as in an erasable programmable read only memory (EPROM). The modules described herein may be implemented as either software and/or hardware modules and may be stored in any type of non-transitory computer-readable medium or other storage device. Some non-limiting examples of non-transitory computer-readable media include CDs, DVDs, BLU-RAY, flash memory, and hard disk drives.

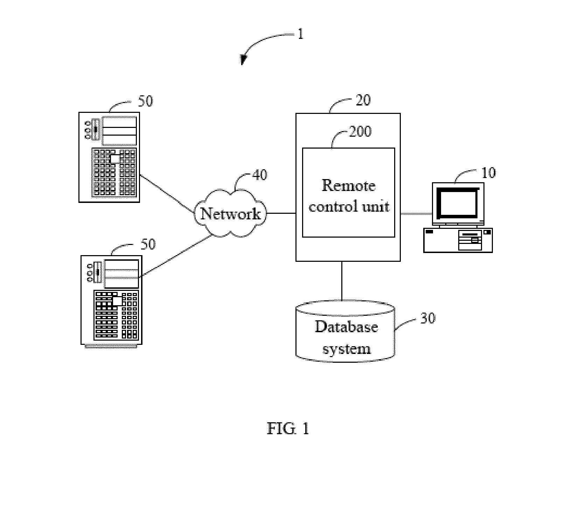

FIG. 1 is a system view of one embodiment of a remote control system 1. In one embodiment, the remote control system 1 may include a client 10, a server 20, a database 30, a network 40 and remote computers 50. The server 20 is connected to the remote computers 50 via the network 40. The network 40 may be, but is not limited to, a wide area network (e.g., the Internet) or a local area network. The remote control system 1 remotely controls the remote computers 50. The server 20 connects to a database system 30 using a data connectivity, such as open database connectivity (ODBC) or JAVA database connectivity (JDBC), for example. Additionally, the client computer 10 connects to the server 20, and the client computer 10 provides a login interface, which is displayed on a displaying device of the client computer 10, for a technician to access the server 20. The technician may input an ID and a password using an input device (e.g., a keyboard) in the login interface and access the server 20.

The server 20, in one example, may be a dynamic host configuration protocol (DHCP) server that provides a DHCP service. In one embodiment, the server 20 may assign Internet protocol (IP) addresses to the remote computers 50 using the DHCP service. In one embodiment, the server 20 uses dynamic allocation to assign the IP addresses to the remote computers 50. For example, when the server 20 receives a request from a remote computer 50 via the network 40, the server 20 dynamically assigns an IP address to the remote computers 50. In one embodiment, the server 20 may be a personal computer (PC), a network server, or any other data-processing equipment that can provide IP address allocation function.

Additionally, a remote control application is installed in the server 20 and the remote computers 50. The remote control application may be, but not limited to, a virtual network computing (VNC) viewer. The remote control application is a graphical desktop sharing system that uses a remote frame buffer protocol (RFB) to remotely control the remote computers 50. The server 20 can control the remote computers 50 using the remote control application.

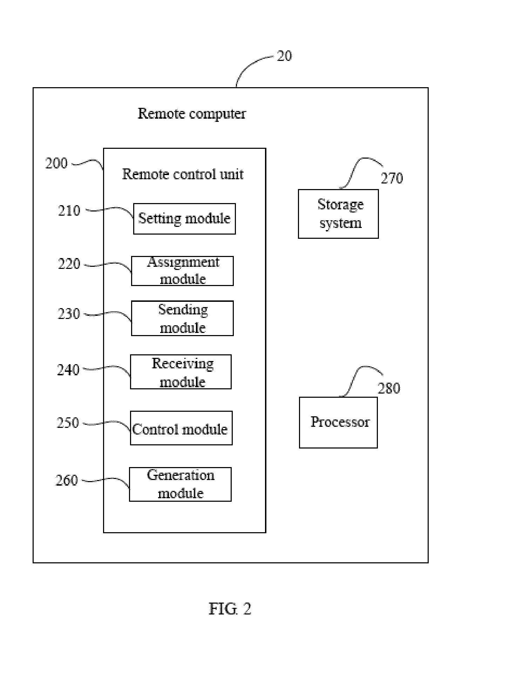

FIG. 2 is a block diagram of one embodiment of function modules of the server 20. The server 20 includes a remote control unit 200, a storage system 270, and at least one processor 280. The remote control unit 200 is used to remotely control the remote computers 50. In one embodiment, the remote control unit 200 includes a setting module 210, an assignment module 220, a sending module 230, a receiving module 240, a control module 250 and a generation module 260. The modules 210-260 may include computerized code in the form of one or more programs that are stored in the storage system 270. The computerized code includes instructions that are executed by the at least one processor 280 to provide functions for the modules 210-260. The storage system 270 may be a memory, such as an EPROM, hard disk drive (HDD), or flash memory.

The setting module 210 sets a monitoring program, and stores the monitoring program in the storage system 270 of the server 20. The monitoring program monitors the remote computers 50 when the remote computers 50 are running. The monitoring program also provides a function that prevents the server 20 from accessing specific files (e.g., private files of the user authorized to use the remote computers 50) in the remote computers 50. The specific files are set by the user of the remote computers 50.

The assignment module 220 assigns an IP address by the DHCP service to each remote computer 50 and communicates with each remote computer 50 via the assigned IP addresses.

The sending module 230 sends the monitoring program to each remote computer 50. In one embodiment, the monitoring program is installed in each remote computer 50.

The receiving module 240 receives a request from the monitoring program installed in the remote computer 50 that has an error. In one embodiment, the error occurs when the remote computer 50 is running, for example, an operating system installed in the remote computer 50 may have a program error (e.g., an Internet browser application installed in the operating system crashes).

The control module 250 activates the remote control application in the server 20 and the remote computer 50, and remotely control the remote computer 50 via the remote control application. In one embodiment, the control module 250 activates the VNC viewer in the server 20 and the remote computer 50, and controls the remote computer 50 using the VNC viewer. In one embodiment, the VNC viewer in the server 20 and the remote computer 50 is activated to be available for use, so that the server 20 is authorized to control the remote computer 50 via the VNC viewer. A technician uses the server 20 to check and analyze the error in the remote computer 50, and handle the error so that the remote computer 50 works normally.

The generation module 260 generates a log file in the server 50 after the error in the remote computer 50 has been processed, and stores the log file into the remote computer 50. The log file may include, but not limited to, a name of the technician, a company where the technician works in, a badge identification of the technician, a staring time for handing the error, an ending time for handing the error, a reason of the error, files or software applications that are stored in the remote computer 50 and have been accessed by the server 20. In one embodiment, if the technician uses the client 10 to access the server 20, the information of the technician (e.g., the name of the technician, the age of the technician, the company where the technician works in, the badge identification of the technician) is recorded into the storage system 270 of the server 20. The information of the technician is integrated into the log file. The user, who is authorized to use the remote computer 50, can check the log file and know what happens to the remote computer 50.

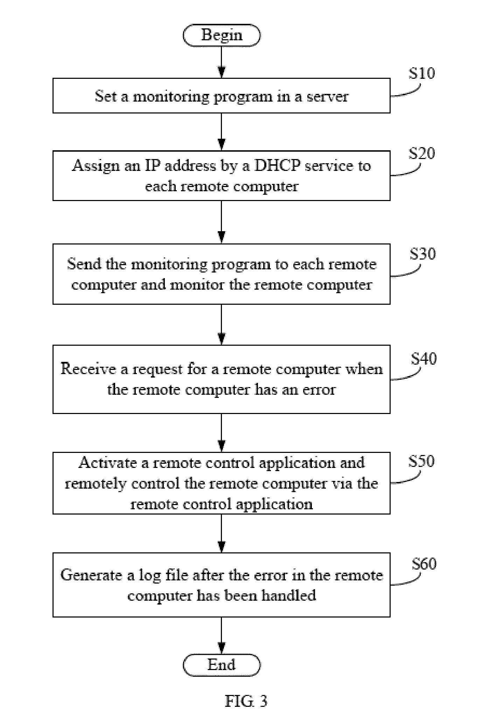

FIG. 3 is a flowchart of one embodiment of a remote control method. Depending on the embodiment, additional steps may be added, others deleted, and the ordering of the steps may be changed.

In step S10, the setting module 210 sets a monitoring program, and stores the monitoring program in the storage system 270 of the server 20. The monitoring program checks if each remote computers 50 has an error when the remote computer 50 is running.

In step S20, the assignment module 220 assigns an IP address by the DHCP service to each remote computer 50 and communicates with each remote computer 50 via the assigned IP addresses.

In step S30, the sending module 230 sends the monitoring program to each remote computer 50. In one embodiment, the monitoring program is installed in each remote computer 50. For example, if the monitoring program should be installed in four remote computers 50, namely A, B, C and D, the sending module 230 sends the monitoring program to the remote computers A, B, C and D. The monitoring program is installed in the remote computers A, B, C and D and is activated to be available for use in the remote computers A, B, C and D.

In step S40, the receiving module 240 receives a request from the monitoring program installed in the remote computer 50 that has an error. In one embodiment, the monitoring program in the remote computer 50 is activated to be available for sending the request to server 20, in response to a determination that the remote computer 50 has an error.

In step S50, the control module 250 activates a remote control application in the server 20 and the remote computer 50, and remotely controls the remote computer 50 via the remote control application. In one embodiment, the control module 250 activates a VNC viewer in the server 20 and the remote computer 50, and controls the remote computer 50 using the VNC viewer. In one embodiment, the VNC viewer in the server 20 and the remote computer 50 is activated to be available for use, so that the server 20 is authorized to control the remote computer 50 via the VNC viewer. A technician uses the server 20 to remotely check and analyze the error generated in the remote computer 50, and handle the error so that the remote computer 50 works normally.

In step S60, the generation module 260 generates a log file in the server 50 after the error in the remote computer 50 has been processed, and stores the log file into the remote computer 50. As mentioned above, the log file may include a name of the technician, a company where the technician works in, a badge identification of the technician, a staring time for handing the error, an ending time for handing the error, an reason of the error, files or software applications that the server 20 accesses in the remote computer 50.

It should be emphasized that the above-described embodiments of the present disclosure, particularly, any embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and the present disclosure and protected by the following claims.

## Claims

1. A server, the server in communication with one or more remote computers, the server comprising:
at least one processor; and
a storage system that stores one or more programs, when executed by the at least one processor, cause the at least one processor to perform a remote control method, the method comprising:
sending a monitoring program from the server to each remote computer, wherein a remote control application is installed in the server and the remote computer;
receiving a request from the monitoring program installed in the remote computer that has an error; and
activating the remote control application in the server and the remote computer, and remotely controlling the remote computer via the remote control application.

2. The server of claim 1, wherein the method further comprises:
generating a log file in the server after the error in the remote computer has been processed, and storing the log file into the remote computer.

3. The server of claim 2, wherein the log file comprises a name of a technician, a company that the technician works in, a badge identification of the technician, a staring time for handing the error, an ending time for handing the error, a reason of the error, files and software applications that have been accessed by the server.

4. The server of claim 1, 2 or 3, wherein the monitoring program in the remote computer is activated to be available for sending the request to server, in response to a determination that the remote computer has the error.

5. The server of any preceding claim, wherein the monitoring program further provides a function that prevents the server from accessing specific files in the remote computer.

6. A computer-based installation method being performed by execution of computer readable program code by a processor of a server, the server in communication with one or more remote computers, the method comprising:
sending a monitoring program from the server to each remote computer,
wherein a remote control application is installed in the server and the remote computer;
receiving a request from the monitoring program installed in the remote computer that has an error; and
activating the remote control application in the server and the remote computer, and remotely controlling the remote computer via the remote control application.

7. The method of claim 6, wherein the method further comprising:
generating a log file in the server after the error in the remote computer has been processed, and storing the log file into the remote computer.

8. The method of claim 7, wherein the log file comprises a name of a technician, a company where the technician works in, a badge identification of the technician, a staring time for handing the error, an ending time for handing the error, an reason of the error, files and software applications that have been accessed by the server.

9. The method of claim 6, 7 or 8, wherein the monitoring program in the remote computer is activated to be available for sending the request to server, in response to a determination that the remote computer has the error.

10. The method of claim 6, 7, 8 or 9, wherein the monitoring program further provides a function that prevents the server from accessing specific files in the remote computer.

11. A non-transitory computer-readable medium having stored thereon instructions that, when executed by a server, the server in communication with one or more remote computers, causing the server to perform a remote control method, the method comprising: sending a monitoring program from the server to each remote computer, wherein a remote control application is installed in the server and the remote computer;
receiving a request from the monitoring program installed in the remote computer that has an error; and
activating the remote control application in the server and the remote computer, and remotely controlling the remote computer via the remote control application.

12. The non-transitory medium of claim 11, wherein the method further comprising:
generating a log file in the server after the error in the remote computer has been processed, and storing the log file into the remote computer.

13. The non-transitory medium of claim 12, wherein the log file comprises a name of a technician, a company where the technician works in, a badge identification of the technician, a staring time for handing the error, an ending time for handing the error, an reason of the error, files and software applications that have been accessed by the server.

14. The non-transitory medium of claim 11, 12 or 13, wherein the monitoring program in the remote computer is activated to be available for sending the request to server, in response to a determination that the remote computer has the error.

15. The non-transitory medium of claim 11, 12, 13 or 14, wherein the monitoring program further provides a function that prevents the server from accessing specific files in the remote computer.
